Europäisches Patentamt

European Patent Office

Office européen des brevets

(11) Publication number: **0 178 784**
**A2**

## (12) EUROPEAN PATENT APPLICATION

(21) Application number: 85306531.6

(22) Date of filing: 13.09.85

(51) Int. Cl.⁴: **G01V 1/40**

(30) Priority: 13.09.84 US 650137

(43) Date of publication of application:
23.04.86 Bulletin 86/17

(84) Designated Contracting States:
DE FR GB

(71) Applicant: ATLANTIC RICHFIELD COMPANY
515 South Flower Street
Los Angeles California 90071(US)

(72) Inventor: Gaiser, James E.
1429 Sequoia
Plano Texas 75023(US)
Inventor: Petermann, Steven G.
3417 Tarkio
Plano Texas 75074(US)
Inventor: Karner, Gary M.
3101 Town Bluff Drive No. 924
Plano Texas 75075(GB)

(74) Representative: Coleman, Stanley et al
MATHYS & SQUIRE 10 Fleet Street
London EC4Y 1AY(GB)

(54) Horizontally stabilized borehole sonde.

(57) The side wall of a three-component VSP borehole sonde
is provided with protuberant rotatable stand-off elements such
as cylindrical rollers or ball bearings. When the sonde is
decentralized by means of a locking arm, these elements may
roll against the borehole wall to equalize unbalanced forces
resulting from sonde orientation in the borehole. The resultant
stable equilibrium prevents the sonde from oscillating in a
horizontal plane regardless of the direction of the seismic
forces experienced.

EP 0 178 784 A2

## HORIZONTALLY STABILIZED BOREHOLE SONDE

### Background of the Invention

#### 1. Field of the Invention

This invention is generally related to the field of seismic wave measurement and more particularly to the design of downhole apparatus for measurement of seismic waves.

#### 2. Description of the Prior Art

Three-component vertical seismic profiles (VSP) measure the total elastic wavefield as a function of depth in a borehole. This is accomplished with the aid of a downhole tool or sonde which carries at least three mutually perpendicular transducer elements. The sonde is clamped to the borehole wall at each depth where data is to be recorded. Seismic events detected by the transducers are transmitted to a surface recorder by means of a cable. In order to record three-component particle motion, the sonde must include non-vertical geophone elements. Commonly the geophones are aligned along and perpendicular to the longitudinal axis of the sonde, but other orientations are used.

A typical prior art VSP geophone sonde is clamped in a borehole by means of a pivoted or telescopic locking arm electrically operated from the surface or by means of a non-retractable bow spring. All of these devices are designed to extend radially from the borehole sonde so as to exert horizontal locking forces against the wall of the borehole sufficient to clamp the sonde in place. When the sonde is in a rigid, static state, the reaction forces exerted on the sonde by the borehole wall will equal the clamping forces.

In the presence of seismic waves, the borehole-sonde system is accelerated. The forces exerted by the seismic accelerations will cause these reaction forces to vary. If the mechanical coupling of the sonde is imperfect in a particular direction, the seismic forces in that direction may exceed the corresponding reaction forces. This enables the sonde to move independently of the borehole wall in such direction. The result is that the geophone oriented to sense such seismic forces will inaccurately measure the corresponding particle motion of the earth.

The critical factor in acquiring good three-component VSP data is therefore the effective coupling of the VSP sonde to the borehole wall. Coupling of a geophone sonde in the vertical direction is not a problem. However, in the horizontal direction there is general concern throughout the industry. The reason is that the typical sonde locking system referenced above applies locking forces in equal and opposite directions along only one horizontal axis or path, which is determined by the direction in which the locking arm extends radially toward the borehole wall. The sonde is deflected by the reaction of the wall in same path oppositely sensed, until it contacts the other side of the borehole. But perpendicular to the direction of these locking and reaction forces the sonde is not rigidly coupled to the borehole. Thus seismic displacements in this perpendicular direction can cause the sonde to oscillate torsionally because there are no forces of resistance.

In co-pending commonly assigned patent application Serial No. 621,357 entitled "Method and System for Determining the Stability of a Geophone Sonde" in the name of James E. Gaiser, an experimental technique is described for determining the presence and nature of the mechanical instabilities of downhole three-component geophone sondes. As pointed out in the referenced application, seismograms recorded from horizontal components in VSP's are typically contaminated with noise which tends to obscure the presence and alignment of both downgoing events and reflections and hence to degrade the effectiveness of the VSP as a source of information.

The prior art has attempted to overcome the stability problem referenced above by adding spaced apart "stand-off" nodes or pads of varying shape and dimension to the side wall of the sonde opposite the locking arm. When the arm is activated, these nodes contact the borehole wall at spaced intervals so as to distribute the reaction force in several different horizontal directions. Experiments such as described in the above-referenced patent application reveal, however, that even with these external features, prior art sondes continue to exhibit horizontal instability. One explanation appears to lie in the sonde's orientation in the borehole when raised to a given depth in a VSP operation. If the axis of the locking arm is skewed to one side of the borehole rather than lying along a bisector, which is statistically likely, the locking arm may deflect the sonde so that one stand-off node makes contact but another does not. Therefore the sonde may in fact contact the borehole at only two points instead of three, as intended. Furthermore, since the locking arm may meet the borehole wall as an acute angle rather than along a normal, such contact is inherently less secure. The above problem is aggravated by the fact that open boreholes are frequently irregular in shape. This increases the chance that the sonde may lodge in a two point contact position which may actually be less stable than if the sonde body were a smooth wall cylinder without force-spreading features. So far as Applicants are aware, therefore, the prior art has not provided adequate means for insuring the horizontal stability of a VSP sonde in all directions while it is clamped in a borehole.

Thus it is a general object of this invention to design a geophone sonde which is stabilized in a borehole environment.

It is a more particular object of this invention to design a three-component VSP geophone sonde which is stabilized in the horizontal plane.

It will be apparent from what follows that the teaching of this invention is adaptable to the stabilizing of other downhole tools and is not intended to be confined to the stabilization of three-component VSP tools.

### Summary of the Invention

In accordance with the preferred embodiment of this invention a VSP geophone sonde includes an elongated cylindrical body which carries radially extendable means for exerting an initial lateral clamping force against the wall of the surrounding borehole in a horizontal direction. In reaction to this clamping force the borehole body is deflected or decentralized toward the opposite side of the borehole wall. The side wall of the sonde body is provided with at least two horizontally spaced apart protuberant stand-off elements through which the sonde body makes low friction, rollable contact with the borehole wall in response to such deflection. Taken in combination with the clamping means, these elements cause the locking force to be exerted against the borehole along at least three different radii. If initial contact with the borehole wall is asymmetric so that one such element makes only weak contact or none at all, the other element can roll against the borehole wall, causing the sonde body to pivot about a vertical axis until a more stable equilibrium is attained.

One species of the stand-off element consists of cylindrical rollers partially recessed within the side wall of the borehole sonde, parallel to the longitudinal axis of the sonde body and supported for rotation about their respective axes. Two such rollers may extend a substantial portion of the length of the sonde body or two separate pairs of such rollers may be positioned respectively adjacent the opposite ends of the sonde body. An alternative version of the roller arrangement substitutes a single roller for one such pair, such single roller being aligned with the path of extension of the clamping means. Alternatively, the stand-off elements may be ball bearings.

In another alternative embodiment of this invention an initial lateral clamping force is applied to a borehole sonde by means of a laterally extendable locking arm which is provided with limited freedom of rotation about an axis concident with or parallel to the longitudinal axis of the sonde. Such a locking arm may be used in combination with fixed or rollable stand-off nodes such as described above for distributing the locking force. This construction also improves the ability of the sonde to reach a stable equilibrium in its clamped state.

Description of the Drawings

FIGURE 1 is a view in vertical elevation of a borehole sonde in accordance with the prior art.

FIGURE 2 is a top view of the device of FIGURE 1 asymmetrically clamped in a borehole.

FIGURE 3 is a vertical elevation of a borehole sonde in accordance with a preferred embodiment of this invention.

FIGURE 4 is a top view taken along the line 4-4 in FIGURE 3.

FIGURE 5 is a detail of a horizontal section through a borehole sonde in accordance with a further alternate embodiment of this invention.

Description of the Detailed Embodiments

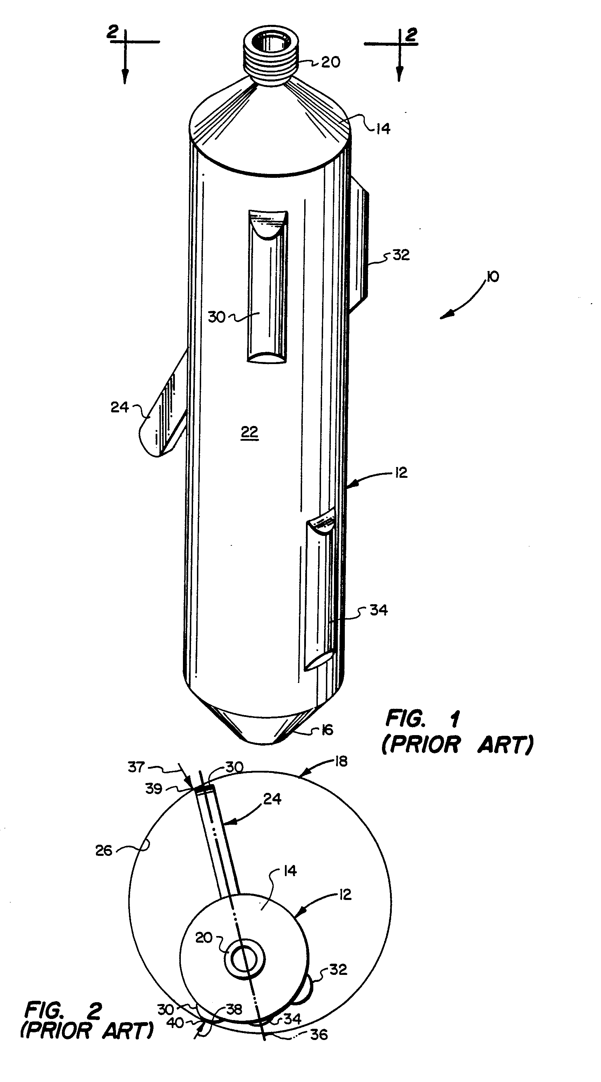

With reference now to FIGURES 1 and 2, there is illustrated a prior art sonde 10 such as VSP borehole sonde, comprising generally an elongated cylindrical sonde body 12 having chamfered upper and lower end 14 and 16. Sonde body 12 may be lowered in a borehole 18 by means of a cable (not shown) attached to threaded coupling 20 at the upper end of body 12.

From one side of the side wall 22 of body 12 a locking arm such as pivotable arm 24 is extendable radially toward wall 26 of borehole 18. Typically the free end of arm 24 is provided with serrations 30 for digging into wall 26. On the opposite side of side wall 22 adjacent the upper end 14 there are secured a pair of stand-off nodes such as pads 30 and 32 extending parallel to the longitudinal axis of body 12. Adjacent the lower end 16 of body 12 a similar pad 34 is attached in parallel alignment with pads 30 and 32. As best seen in FIGURE 2 pads 30 and 32 are angularly offset to either side of the radial path 36 of arm 24 while pad 34 lies on such path.

If sonde 10 is designed as a VSP sonde it may carry three orthogonal geophones (not shown), one of which may conveniently be oriented to sense seismic vibrations along the longitudinal axis of body 12, the other two such geophones being situated in mutually perpendicular alignment transverse to such longitudinal axis in order to sense seismic vibrations similarly directed. So as to gather VSP data body 12 is lowered to any desired depth in borehole 18 and clamped into position.

If the axis 36 of body 12 is not aligned with a diameter of borehole 18, as shown in FIGURE 2, upon extension of locking arm 24 until contact is made with borehole wall 26, a force of reaction will deflect body 12 until pad 30 also makes contact with wall 26. The misalignment may be such that pads 32 and 34 as shown make no contact at all. The resulting two point contact generates horizontal reaction forces 37 and 38 at points 39 and 40 respectively. If the irregularities of borehole 18 are sufficient to compensate for the unbalance between forces 37 and 38, the body 12 will remain lodged as shown. However, this is not a stable equilibrium. Hence, horizontal geophones mounted in body 12 may be expected to experience unwanted oscillation in the presence of seismic vibrations.

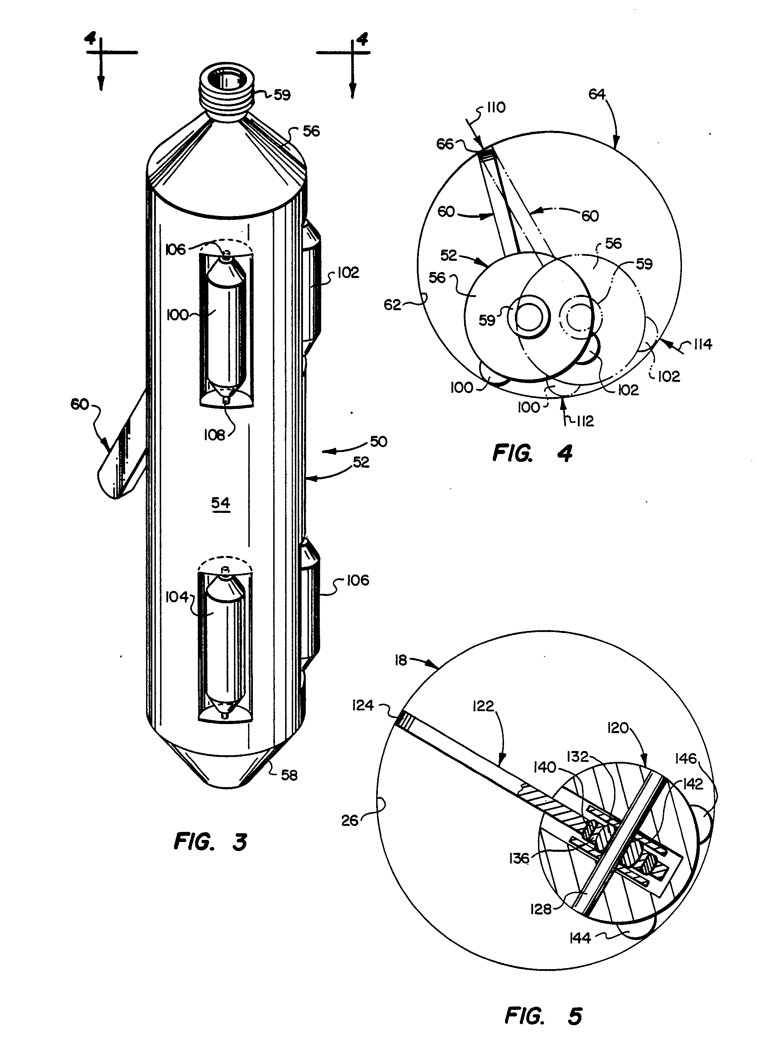

In accordance with the preferred embodiment of this invention depicted in FIGURES 3 and 4, sonde 50 comprises a body 52 with cylindrical side wall 54 and chamfered upper and lower ends 56 and 58. Locking arm 60 is radially extendable to contact side wall 62 of borehole 64 and dig in with the aid of serrations 66. Mounted on side wall 54 are an upper pair of cylindrical rollers 100 and 102 and a lower pair of similar rollers 104 and 106. Roller 100, representative of each such roller, is seen to be partially recessed within side wall 22 and supported by means of pivots 107 and 108 for rotation about its longitudinal axis. Within the scope of this invention roller 100, like the others, may be designed as a bearing within a cylindrical race, or may even be replaced by a plurality of ball bearings.

Rollers 104 and 106 are coaxially aligned with rollers 100 and 102 and the total available horizontal locking force is thus shared among all four rollers. As seen in FIGURE 4, if body 52 should initially be asymmetrically aligned with borehole 64, upon extension of arm 60, rollers 100 and 104 may contact wall 62, while rollers 102 and 106 may not. In that event, rollers 100 and 104 may roll transversely on their respective axes against the surface of wall 62, enabling the sonde body 52 to shift position as shown in dotted outline on FIGURE 4. This in turn permits further radial extension of arm 60 and helps to insure full contact of rollers 102 and 106. In this position the radial force 110 exerted against locking arm 60 is distributed equally at the other side of borehole 64 between rollers 100 and 102 and between rollers 104 and 106 as shown by reaction forces 112 and 114. The resultant stable equilibrium provides three radially separated points of contact between body 52 and borehole 64 viewed in a horizontal plane. This insures that sonde 50 exhibits good mechanical coupling with borehole 64 not only along the axis of locking arm 60 but in a direction perpendicular thereto. This therefore substantially decreases the likelihood of noisy VSP records regardless of the orientation of the sonde geophones.

In a further alternate embodiment of this invention as seen in FIGURE 5, a sonde body 120 carries a locking arm 122 which is provided with serrations 124 to engage the surface of borehole wall 26. Locking arm 122 is pivotable about a transverse horizontal axis 128 within sonde body 120. In addition locking arm 122 is provided with limited freedom to pivot or wobble about the longitudinal axis of body 120 by means of a spherical bearing 132, such as for example the type manufactured by Alinabal, Division of MPB Corporation. Spherical bearing 132 receives axle 128 thus providing one degree of freedom of rotation for arm 122. A race 136 mounted fixedly to arm 122 within housing 140 turns on the surface of bearing 132 to enable arm 122 limited rotary movement about a vertical axis within the angular limits established by collar 142. Coupled with wall-contacting stand-off elements 144 and 146 on the side wall of sonde body 120 this construction gives an additional degree of flexibility in seating sonde body 120 in a stable condition. Obviously the embodiment of FIGURE 5 may employ a variety of different configurations for elements 144 and 146 such as rollers having axes parallel to the axis of the sonde body 120 or ball bearings or fixed cylindrical projections with axes parallel to the axis of the body or fixed spherical projections.

Most broadly considered, the invention described herein comprehends a sonde body adapted to be clamped in a borehole by exerting horizontal clamping forces distributed along at least three radii of the borehole wherein means are provided enabling the sonde body to pivot about one or more vertical axes in its clamped state in order to achieve a more stable equilibrium. The invention may utilise for this purpose any configuration of spaced apart protuberant rollable elements on the side wall of a VSP sonde to be clamped in a borehole by means of a horizontally directed clamping force. Such rollable elements may be employed, if desired, in conjunction with fixed stand-off members of varying configuration of which many are known to the art. Or, as described, means may be introduced to permit the sonde body in a clamped condition, a limited freedom to rotate about is own axis with respect to the direction of such horizontal clamping force. The common object of all such combinations is that when clamped in a borehole the sonde body self-adjusts from an unstable to a stable equilibrium position within the borehole wall. Any means may be utilised to alter the shape or internal articulation of the sonde body to achieve the purposes of this invention.

It should be understood that within the scope of this invention, there is no intention to limit the specific type of locking arm or other active locking mechanism which may be employed. Any and all of such means may be utilised in this invention which clamp a borehole sonde in place by means of decentralising forces. The force-distributing elements may themselves be laterally extendable in order to vary the geometry of the sonde, as for example to accommodate boreholes of different diameter.

What has been described above is illustrative only and those skilled in the art will be able to make many modifications in the confirmation and interrelationship between specific components without departing from the invention as set forth in the appended claims.

Claims

1. A borehole sonde adapted to be horizontally stabilised in a borehole, comprising an elongated generally cylindrical sonde body (12,52,120) positionable at a selected depth so that the longitudinal axis of said borehole and said body are in alignment, two projecting means (30,32) provided on said body for force transmitting engagement with the borehole and clamping means (24,60,122) adapted to apply clamping force between said body and said borehole in a direction between said projecting means, characterised in that pivotable means (100,102,104,106,132,136) are provided on the sonde body which enable during clamping of said body to the borehole, displacement of said body relatively to the borehole axis to establish balance between the forces exerted by the clamping means and between each of said projecting means and the borehole.

2. A borehole sonde adapted to be horizontally stabilised in a borehole comprising:

(a) an elongated tubular sonde body positionable in said borehole at a selected depth so that the longitudinal axes of said borehole and said body are in alignment;

(b) means for exerting a clamping force between said body and said borehole in a horizontal direction adapted to decentralise said body, the configuration of said body being such as to establish force-transmitting contact with the wall of said borehole along two separate radii of said body in the horizontal plane of the clamping force responsive to said decentralisation; and

(c) means enabling said sonde body to pivot in its clamped state about an axis parallel to the longitudinal axis of the borehole responsive to any unbalance between said clamping force and the forces transmitted to said borehole wall along said radii.

3. Apparatus as in Claim 2 wherein said clamping force is exerted by means of a locking arm attached to said sonde body and extendable therefrom to make contact with said borehole wall and said pivot means comprises means enabling limited freedom of rotation of said locking arm about the longitudinal axis of said sonde body.

4. A borehole sonde adapted to be horizontally stabilised in a borehole comprising:

(a) an elongated generally cylindrical sonde body positionable in said borehole at a selected depth so that the longitudinal axes of said borehole and said body are in alignment;

(b) means for exerting a clamping force between said body and said borehole in a horizontal direction adapted to decentralise said body; and

(c) stand-off means carried on and protruding laterally from the side wall of said body positioned to establish force-transmitting contact with the wall of said borehole along two separate radii thereof in a horizontal plane responsive to said decentralisation, said means being rollable against said wall response to any unbalance between the borehole reaction to said clamping force and the forces transmitted along said radii.

5. Apparatus as in Claim 4 wherein said means protruding laterally from said side wall comprises a pair of rollers extending parallel to the longitudinal axis of said body, said rollers being partially recessed within said side wall and supported for rotation about their respective axes.

6. A device as in Claim 5 including additional stand-off means on said side wall vertically spaced from said pair of rollers and adapted to contact said borehole wall concurrently therewith.

7. A device as in Claim 4 wherein said radii are angularly separated by 90 degrees.

8. A borehole sonde adapted to be horizontally stabilised within a borehole at a selected depth therein comprising:

(a) an elongated generally cylindrical sonde body positiona-

ble at a selected depth in said borehole so that the longitudinal axis of said body and said borehole are in alignment;

(b) a locking arm attached to said sonde body and extendable laterally therefrom by pivoting about an axis transverse to the longitudinal axis of said body so as to apply a horizontal force against the wall of said borehole, thereby decentralising said sonde body toward said borehole wall in the opposite direction; and

(c) means carried on and protruding laterally from the side wall of said body for establishing force-transmitting contact with the wall of said borehole along at least two separate radii thereof responsive to said decentralisation, said means being rollable against said wall responsive to any unbalance between the borehole reaction to said clamping force and the forces transmitted along said radii.

9. Apparatus as in Claim 8 including means enabling limited freedom of rotation of said locking arm about the longitudinal axis of said sonde body.

0 178 784

FIG. 1
(PRIOR ART)

FIG. 2
(PRIOR ART)

FIG. 3

FIG. 4

FIG. 5